# EUROPEAN PATENT SPECIFICATION

(11) **EP 0 494 116 B1**
(45) Date of publication and mention of the grant of the patent: **30.08.1995**
(21) Application number: 92300048.3
(22) Date of filing: 03.01.1992
(51) Int. Cl.: B62D 21/02, B62D 21/12

(54) **A frame assembly for automotive vehicles**
Längsträgerrahmen für Kraftfahrzeuge
Cadre à longerons pour véhicules automobiles

(30) Priority: 04.01.1991 US 638486
(43) Date of publication of application: 08.07.1992
(73) Proprietor: FORD MOTOR COMPANY LIMITED, Brentwood, Essex CM13 3BW (GB); FORD-WERKE AKTIENGESELLSCHAFT, 50725 Köln (DE); FORD FRANCE S. A., 92506 Rueil-Malmaison Cédex (FR)
(72) Inventor: Fobar, William J., Wyandotte, Michigan 48192 (US); Maliszewski, Robert L., Canton Twp., Michigan 48188 (US); Haddad, Charles J., Bloomfield Twp., Michigan 48013 (US); Bridges, Wade T., Birmingham, Michigan 48009 (US)
(74) Representative: Messulam, Alec Moses

(56) References cited:
- EP-A- 0 229 591
- EP-A- 0 234 800
- EP-A- 0 234 800
- WO-A-90/04534

## Description

The present invention relates generally to frame structures for automotive vehicles.

It is known to construct frames defining the general shape of an automobile and for supporting its various load-bearing functional components from metal components fabricated in a variety of manners. In the interest of enhancing the fuel economy of automotive vehicles, great attention has been given to fabricating vehicular components from lightweight materials. Consistent with this goal, automobiles have been fabricated which use lightweight outer decorative panels fabricated from plastics which are fixedly secured to a structural inner frame or "space frame".

It is known to fabricate such frames from a number of tubular members that are joined by fixed connectors to define the general shape of the vehicle. While this approach provides a distinct advantage in weight and in the tooling cost of manufacturing over the conventional fabrication of unibody construction through massive stampings, it suffers from the disadvantage that the connectors utilised for joining the tubular components together tend to be massive and expensive to fabricate and assemble.

WO-A-90/04534 discloses a frame assembly for an automotive vehicle according to the preamble of claim 1 and comprising a plurality of longitudinally extending structural members, a plurality of transversely extending structural members and connector means including bolts disposed on adjacent portions of certain of said longitudinal structural members and said transverse structural members to permit slidable engagement therebetween and to fixedly secure said longitudinal structural members to said transverse structural members.

EP-A-0,234,800 discloses a load-bearing member comprising at least two hollow extrusions of light metal alloy, each formed with two surfaces mated together with a layer of adhesive therebetween by relative linear movement of the extrusions in a single direction, the surfaces on one of extrusions being formed on limbs projecting therefrom and the angle between the mating surfaces and said direction being with in the range of 5° to 15°, the surfaces on the other extrusion terminating in shoulders to be approached by the tips of the limbs and means to ensure that the layer of adhesive always extends between the shoulders and the tips.

Responsive to this deficiency in the know industrial practice, it is an object of the present invention to provide a space frame assembly for an automotive vehicle that consists of a plurality of extruded members configured to facilitate their direct interlocking for fixed securement.

According to the present invention there is provided a frame assembly for an automotive vehicle comprising, a plurality of longitudinally extending extruded structural members (14,16), a plurality of transversely extending extruded structural members (24,26), and connector means (46,48,50,54) disposed on adjacent portions of certain of said longitudinal structural members (14,16) and said transverse structural members (24,26) to permit slidable engagement therebetween and to fixedly secure said longitudinal structural members to said transverse structural members characterised in that the connector means comprises a slide (50,54) coextruded with one of the extruded structural members and a channel (46,48) coextruded with the other of the structural members, the slide engaging the channel for axial sliding movement therein.

The invention will now be described further, by way of example, with reference to the accompanying drawings, in which :
Figure 1 is a perspective view of a space frame according to the present invention.
Figure 2 is an exploded view of a portion of a front corner of the frame of Figure 1.
Figure 3 is a vertical cross-sectional view of the corner configuration of Figure 2.
Figure 4 is a perspective view of the interlocking slide and channel connection of Figures 1-3.
Figure 5 is a perspective view of an alternate slide and channel configuration, and
Figure 6 is a perspective view of an alternative front corner construction similar to Figure 2.

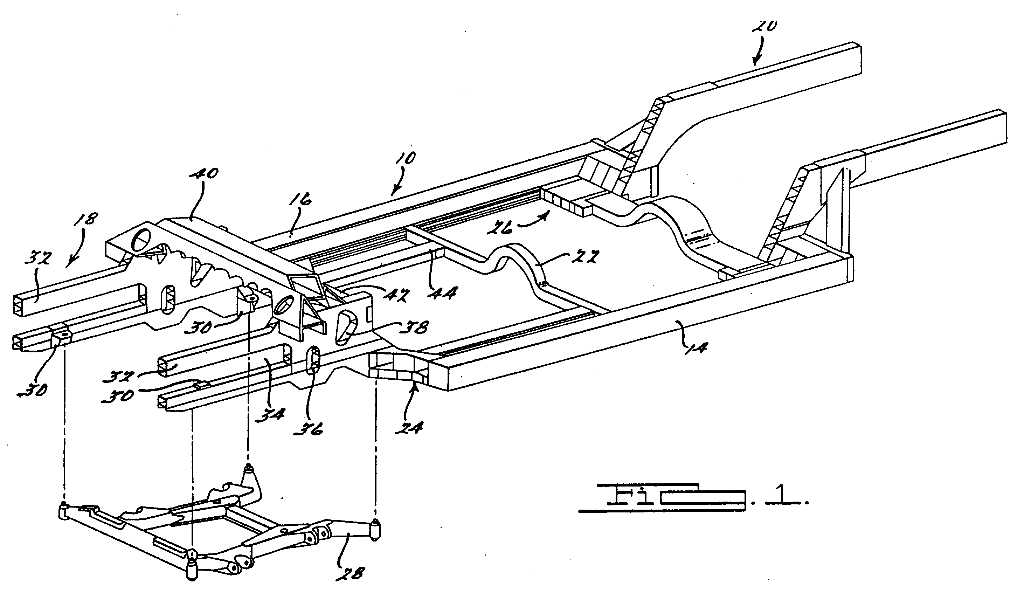

Turning now to the drawings and in particular to Figure 1 thereof, a space frame 10 according to the present invention is illustrated as comprising longitudinally extending side rails 14,16, a front structural subassembly 18, a rear structural subassembly 20, a laterally extending central cross member 22 interconnecting the rails 14, 16 and front and rear torque boxes 24, 26 respectively, for mounting the front and rear structural subassemblies 18, 20 respectively.

In the embodiment of Figure 1, an engine subframe subassembly 28 is illustrated as being fixedly secured to the front structural subassembly 18 as through hangers 30. It is to be understood, however, while the front structural subassembly 18 is illustrated is well adapted to carry an automobile engine and its associated componentry, the engine subframe 28 itself does not form a necessary part of the space frame 10.

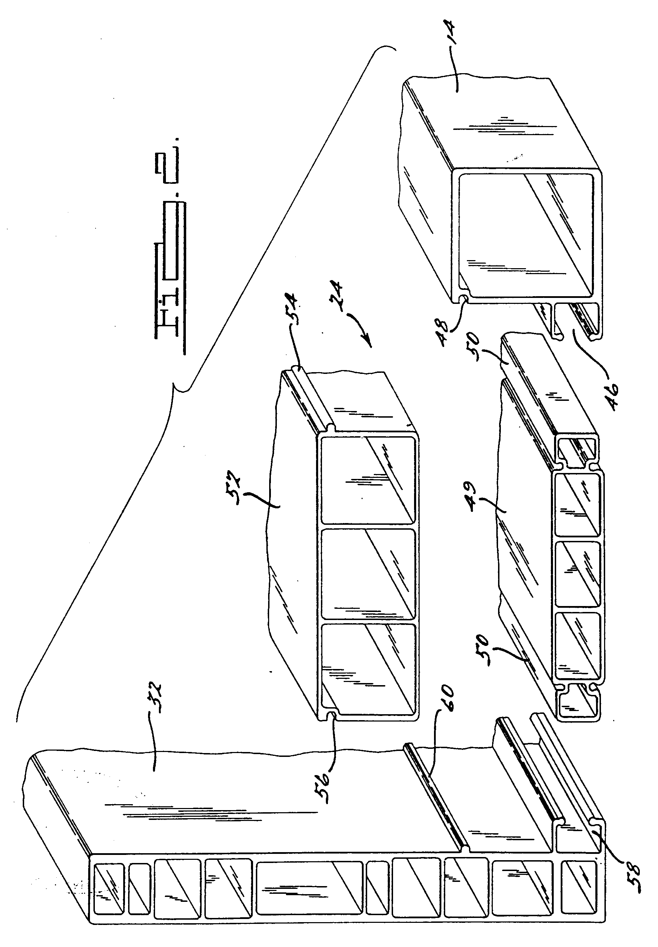

According to the invention, the side rails 14, 16 and are secured to the central cross member 22 and to the torque boxes 24, 26 which are in turn secured to the front structural subassembly 18 and the rear structural subassembly 20, respectively, by sliding engagement effected between adjacent portions of the components without the use of any extraneous connectors, owing to the integrally formed interlocking surfaces shown in Figures 2 through 6. While the interlocking configuration shown are best adapted for manufacturing through extruding aluminium sections of multicellular configuration, equivalent cast or wrought sliding structure could provide functional equivalents. After sliding the associated components to the position shown in Figure 1, final securement is preferably effected through application of an adhesive between adjacent portions of the mating parts. A two-part thermo setting epoxy has been successfully used to effect such a bond.

The front structural subassembly 18 is illustrated as comprising a pair of spaced rail members 32 which are formed as multicelled extrusions from aluminium. A plurality of apertures such as indicated at 34, 36, 38 may be machined through the rail 32 to provide component weight minimisation and to provide clearance for adjacent functional components, such as steering components and drive line half shafts. An upper suspension arm cross member 40 is illustrated as spanning the front rails 32 to which it may be welded or adhesively secured. A steering column support member 42 may also be positioned to span the front rails 32. A rear portion 44 of each front rail 32 extends rearwardly to perpendicularly abut and to be fixedly secured to the centre cross member 22.

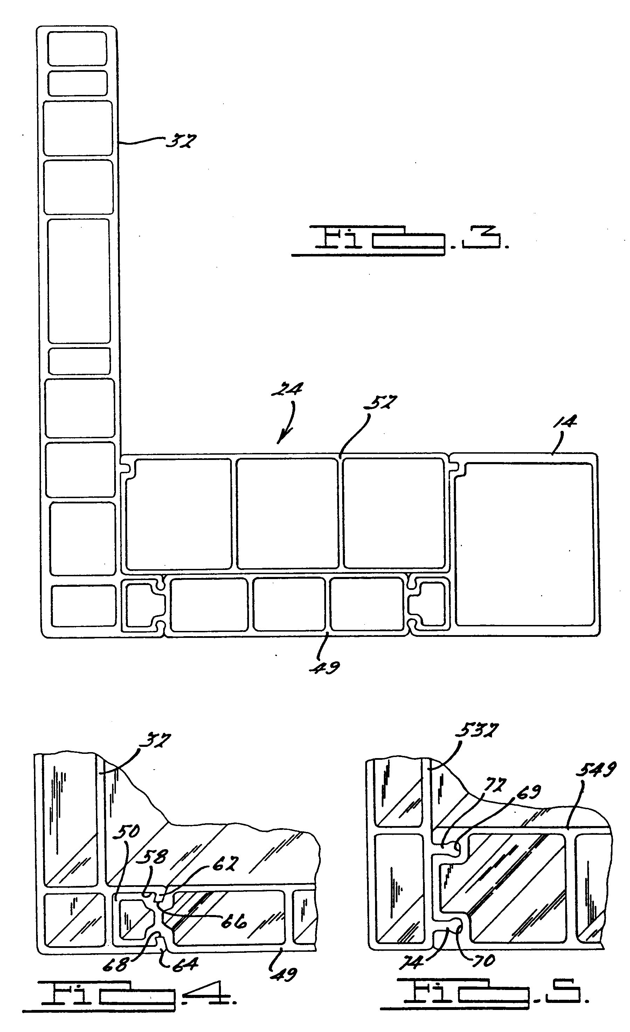

As may best be seen in Figures 2 and 3, an interlocking connection is effected between the front rail 32 and the side rail 14 through the torque box 24. It will of course be appreciated that another from rail-to-rocker connection is effected by a torque box arrayed symmetrically on the other side of the space frame 10.

Turning now to Figures 2 and 3, the side rail 14 is illustrated as comprising a generally rectangular extruded member having a longitudinally extending channel pocket 46 adjacent its bottom and a longitudinally extending channel pocket 46 adjacent its bottom and a longitudinally extending channel 48 adjacent its top.

The channel pocket 46 and the channel 48 are configured to sliding receive complementary portions of the torque box 24 which is preferably fabricated as a two-piece assembly, as may best be seen in Figure 2. Both pieces are multicellular extruded structures. The lower member 49 includes end slide cells 50, which engage the slide pocket 46 in sliding relationship, and the larger upper member 52 is illustrated as including on one side a slide tab 54 for slidingly engaging the channel 48, and on the other side, a channel 56. The rail unit 32 is likewise an extruded multicellular structure and includes a lower slide pocket 58 providing essentially a mirror image to the pocket 46 of rocker 14 for slidingly engaging the slide cell 50 of the lower torque box member 49. An upper slide projection 60 is positioned for sliding engagement with the upper channel 56 of upper torque box member 52.

The increased cross-section of the upper torque box member 52 may be chosen to appropriately handle twisting loads of an automotive vehicle in use, but with the two-piece torque box construction, that upper section need not be longitudinally extended, while the lower member 49, or at least its slide cells 50, may be extended longitudinally to whatever length is deemed appropriate to effect the appropriate bonding interconnection between the components without incurring serious weight penalty.

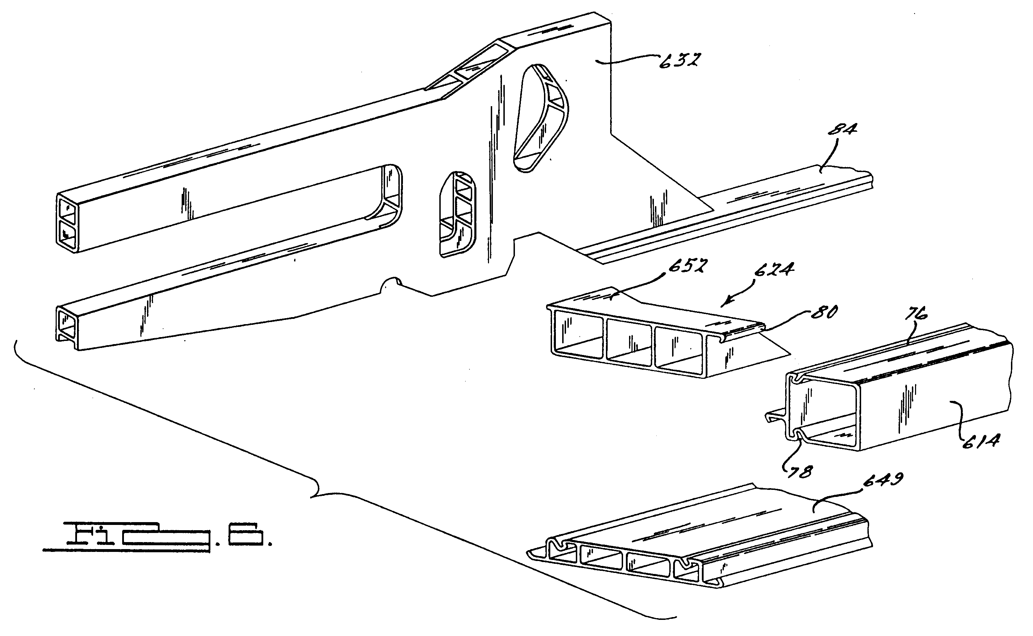

Turning next to Figure 4 and 5, the slide and channel configurations, which may be used to effect the type of interlocking relationship between structural components provided for in the space frame 10 of the present invention, are illustrated. In the configuration of Figure 4, the type of connection shown for the joining of the rail unit 32 and the lower torque box member 49 is illustrated. The channel pocket 58 of the side rail 32 is of general rectangular configuration and includes upper and lower ledges 62, 64 respectively, which are received in upper and lower grooves 66, 68 respectively, formed at the inter terminus of the slide cell 50. Sliding movement of the member 49 with respect to the rail member 32 is constrained to the axial direction defined by the longitudinally extending channel pocket 58.

The Figure 5 configuration shows an internal embodiment in which a vertical member 532 is joined to horizontal member 549 through the provision of upper and lower channels 69, 70, respectively, being formed on an end of the horizontal member 549 and outwardly projecting upper and lower tabs 72, 74 being formed on a facing portion of the vertical member 532.

The alternative front corner configuration shown in perspective in Figure 6 illustrates an alternative slide-and-channel connection for joining a longitudinally extending side rail 614 to a longitudinally extending multicellular extruded front rail 632 through a front torque box 624. In this configuration, an upward facing groove 76 and a downward facing groove 78 are formed on the side rail 614 for receiving a slide 80 of an upper torque box member 652 and an upward facing slide of lower torque box member 649. Similar slide-and-channel connections are effected on the inboard side between the torque box components and the rear portion 84 of the side rail 632. While the geometrical configuration of the slide-and-channel interlocking relationship of the Figure 6 embodiment is different from that of the previously disclosed embodiments, the associated structural components nevertheless slide together to an appropriate position, thus being self-fixturing to maintain the position in which final securement is effected through adhesive or other means.

## Claims

1. A frame assembly for an automotive vehicle comprising, a plurality of longitudinally extending extruded structural members (14,16), a plurality of transversely extending extruded structural members (24,26), and connector means (46,48,50,54) disposed on adjacent portions of certain of said longitudinal structural members (14,16) and said transverse structural members (24,26) to permit slidable engagement therebetween and to fixedly secure said longitudinal structural members to said transverse structural members characterised in that the connector means comprises a slide (50,54) coextruded with one of the extruded structural members and a channel (46,48) coextruded with the other of the structural members, the slide engaging the channel for axial sliding movement therein.

2. A frame assembly as claimed in claim 1, wherein the structural members are rectangular extruded structural members.

3. A frame assembly as claimed in claim 1, wherein the extruded structural members each comprise a plurality of elongate cells of generally rectangular cross-section.

4. A frame assembly as claimed in any one of claims 1 to 3, wherein the structural members are formed from aluminium.

5. A frame assembly as claimed in claim 1, wherein the channel and the slide are formed of substantially rectangular complementary cross-section.

6. A frame assembly as claimed in any one of the preceding claims, wherein the connector means includes an adhesive disposed between the structural member adjacent portions.

## Patentansprüche

1. Rahmeneinheit für ein Kraftfahrzeug, welche eine Vielzahl sich längs erstreckender, stranggepreßter Strukturelemente (14,16), eine Vielzahl sich quer erstreckender, stranggepreßter Strukturelemente (24,26) und Verbindungsmittel (46,48,50,54) beinhaltet, die an angrenzenden Teilen bestimmter der genannten Längsstrukturelemente (14,16) und der genannten Querstrukturelemente (24,26) angeordnet sind, um dazwischen einen Gleiteingriff zu ermöglichen und um die genannten Längsstrukturelemente steif an den genannten Querstrukturelementen zu befestigen, dadurch gekennzeichnet, daß das Verbindungsmittel ein Gleitstück (50,54), das mit einem der extrudierten Strukturelemente koextrudiert wird und einen Kanal (46,48) enthält, der mit dem anderen der Strukturelemente koextrudiert wird, wobei das Gleitstück in den Kanal eingreift, um darin eine axiale Gleitbewegung auszuführen.

2. Rahmeneinheit nach Anspruch 1, bei welcher die Strukturelemente rechtwinklige, stranggepreßte Strukturelemente sind.

3. Rahmeneinheit nach Anspruch 1, bei welcher die Strukturelemente jeweils eine Vielzahl länglicher Zellen mit im allgemeinen rechtwinkligem Querschnitt beinhalten.

4. Rahmeneinheit nach einem der vorstehenden Ansprüche 1 bis 3, bei welcher die Strukturelemente aus Aluminium geformt werden.

5. Rahmeneinheit nach Anspruch 1, bei welcher der Kanal und das Gleitstück mit einem im wesentlichen rechtwinkligen, komplementären Querschnitt geformt werden.

6. Rahmeneinheit nach einem der vorstehenden Ansprüche, bei welcher das Verbindungsmittel ein Klebemittel beinhaltet, das zwischen den angrenzenden Teilen der Strukturelemente aufgetragen wird.

## Revendications

1. Unité de cadre pour un véhicule automobile comprenant plusieurs éléments structurels (14, 16) extrudés s'étendant de manière longitudinale, plusieurs éléments structurels (24, 26) extrudés s'étendant de manière transversale et des moyens de raccordement (46, 48, 50, 54) disposés sur des portions adjacentes de certains desdits éléments structurels longitudinaux (14, 16) et desdits éléments structurels transversaux (24, 26) destinés à permettre l'engagement coulissant entre celles-ci et à fixer de manière fixe lesdits éléments structurels longitudinaux auxdits éléments structurels transversaux, caractérisée en ce que les moyens de raccordements comprennent une glissière (50, 54) coextrudée avec l'un des éléments structurels extrudés et un canal (46, 48) coextrudé avec les autres éléments structurels, la glissière s'engageant avec le canal pour se déplacer en coulissant axialement à l'intérieur de celui-ci.

2. Unité de cadre selon la revendication 1, dans laquelle les éléments structurels sont des éléments structurels extrudés rectangulaires.

3. Unité de cadre selon la revendication 1, dans laquelle les éléments structurels extrudés comprennent chacun plusieurs cellules allongées de coupe transversale généralement rectangulaire.

4. Unité de cadre selon l'une des revendications 1 à 3, dans laquelle les éléments structurels sont formés en aluminium.

5. Unité de cadre selon la revendication 1, dans laquelle le canal et la glissière sont formés avec une section transversale complémentaire, essentiellement rectangulaire.

6. Unité de cadre selon l'une des revendications précédentes, dans laquelle les moyens de raccordement incluent un adhésif entre les portions adjacentes de l'élément structurel.
